# EUROPEAN PATENT SPECIFICATION

(11) **EP 2 518 219 B1**
(45) Date of publication and mention of the grant of the patent: **21.03.2018**
(21) Application number: 10838952.9
(22) Date of filing: 22.12.2010
(51) Int. Cl.: B60L 11/18, B60L 15/20, E02F 9/20, E02F 9/12, E02F 9/22, H02P 3/18

(54) **DEVICE FOR DRIVING/CONTROLLING AC MOTOR**
VORRICHTUNG ZUR ANSTEUERUNG/STEUERUNG EINES WECHSELSTROMMOTORS
DISPOSITIF D'ACTIONNEMENT/COMMANDE DE MOTEUR CA

(30) Priority: 25.12.2009 JP 2009295266
(43) Date of publication of application: 31.10.2012
(73) Proprietor: Takeuchi Mfg. Co., Ltd., Nagano 389-0605 (JP)
(72) Inventor: KUMEUCHI, Kengo, Hanishina-gun Nagano 389-0605 (JP); OKUTANI, Shunpei, Hanishina-gun Nagano 389-0605 (JP)
(74) Representative: Patentwerk B.V.
(86) International application number: PCT/JP2010/007421
(87) International publication number: WO 2011/077714

(56) References cited:
- EP-A1- 1 288 505
- EP-A1- 2 031 135
- WO-A1-2008/041395
- JP-A- 2001 011 899
- JP-A- 2001 226 077
- JP-A- 2007 170 050
- JP-A- 2007 321 898
- JP-A- 2009 197 515
- JP-A- 2009 293 668
- US-A1- 2002 125 052

## Description

### TECHNICAL FIELD

The present invention relates to a device for driving/controlling an AC electric motor used in order to drive, primarily, construction machinery or the like.

### TECHNICAL BACKGROUND

Power shovels or other construction machines are examples of a machine comprising a hydraulic control device having a configuration in which a hydraulic pump is driven, and working oil supplied from the hydraulic pump is used to actuate a hydraulic actuator. Possible examples of the hydraulic actuator include a hydraulic motor, a hydraulic cylinder, and the like; and by actuating these hydraulic actuators using a hydraulic control device, the cylinder of a travel device, a revolving device, a boom, an arm, a bucket, or another component is actuated to perform various operations such as traveling and excavating. In addition to traveling and excavating work, a power shovel is also capable of performing operations such as causing a vehicle to revolve, and moving earth.

In construction machine devices such as power shovels, there has recently been envisioned and realized a configuration in which the hydraulic pump is driven by an electric motor (particularly an AC electric motor), and the revolvable driving of a revolving device is driven by an electric motor, such as implicitly disclosed in WO 2008/041395 A1.

In hydraulic control devices configured to use oil pressure obtained from the driving of a hydraulic pump by an electric motor (an AC electric motor) in this manner, reducing the amount of electric power used by the electric motor is a problem. In view of this, there are known in the art hydraulic control devices configured so that a plurality of electric devices are supplied with electric power from a battery via a plurality of respective inverters, and when the remaining amount of electric power of the battery (hereinbelow referred to as the remaining battery life) has decreased to a predetermined value or less, electric power control means performs a control for minimizing the total electric power used by controlling the output electric power amount to any electric device of the plurality of electric devices so that the output electric power amount is reduced (for example see Patent Document 1). With such a hydraulic control device, the actuating rate of the hydraulic actuator is also reduced along with the reduction control of the main electric power amount; therefore, not only can the amount of electric power used be reduced, but the operator can be informed of the reduction in the remaining battery life as well.

Among construction machines (electric construction machines) that use the rotational drive force of an electric motor as the drive source, there are those configured so as to use regenerative electric power to recharge the battery in order to minimize the power consumption of the battery. Particularly, construction machines have been proposed in which a revolving base of the construction machine has a large inertial mass, and the construction machine is therefore configured so that when the revolving base is revolvably driven, electric power is supplied to the electric motor to actuate the electric motor with electric motor characteristics, and when revolving is braked, the electric motor is actuated with power generator characteristics and the battery is recharged with the generated electric power (for example, see Patent Documents 2 and 3).

### PRIOR ARTS LIST

### PATENT DOCUMENT

Patent Document 1: Japanese Laid-open Patent Publication No. 2008-63902(A)
Patent Document 2: Japanese Laid-open Patent Publication No. 2007-100372(A)
Patent Document 3: Japanese Laid-open Patent Publication No. 2009-155989(A)

### SUMMARY OF THE INVENTION

### PROBLEMS TO BE SOLVED BY THE INVENTION

In a hydraulic control device configured to use the oil pressure obtained from the driving of a hydraulic pump by an electric motor, although it is possible to reduce the amount of electric power used as the remaining battery life decreases and to inform the operator of the reduction in remaining battery life, consideration has not been given to reducing the amount of electric power used even when the remaining battery life is still high. Consequently, there have been problems in that output cannot be reduced even during excavation and other times when it is acceptable for the output of the electric motor to be low, and needless electric power consumption cannot be reduced.

In devices for driving/controlling an electric construction machine having a configuration in which the electric motor is actuated with power generator characteristics when revolving is braked to regenerate electric power, electric motor control during revolving deceleration has been performed so as to achieve an operational feel similar to revolving control by a conventional hydraulic motor for revolvable driving. Specifically, in a state in which the revolving base is being revolvably driven based on a revolving operation, when a revolving operating lever is returned to a neutral position or tilted past the neutral position, a limit value of the electric current regenerated by the electric motor has been set to an electric current value of comparatively low absorption torque so that the revolving base slowly decelerates and stops.

However, in cases in which an electric motor is used with power generator characteristics, an electric motor having a high absorption torque is commonly characterized in being highly efficient in inverting to electric power. Therefore, conventional electric construction machines have had satisfactory operational feel, but have had problems with low energy regeneration efficiency.

Because of such matters, an object of the present invention is to provide a device for driving/controlling an AC electric motor in which the amount of electric power used by an electric motor or the like can be varied, whereby needless electric power consumption can be reduced and energy can be conserved.

Another object of the present invention is to provide a device for driving/controlling an AC electric motor capable of more efficiently utilizing regenerated electric power when revolving is braked while preserving a satisfactory revolving operational feel during both the revolvable driving of a revolving base and braking control.

### MEANS TO SOLVE THE PROBLEMS

To resolve the problems described above, the device for driving/controlling an AC electric motor according to claim 1 is defined.

In the device for driving/controlling an AC electric motor, preferably, the driven device is configured from a hydraulic pump driven by the AC electric motor and adapted to discharge working oil and a hydraulic actuator driven by the working oil discharged from the hydraulic pump, oil pressure detection means is provided for detecting the working oil pressure of the hydraulic actuator, and the electric power control means performs a control for adjusting the magnitude of the AC power supplied to the AC electric motor on the basis of the working oil detected by the oil pressure detection means.

The device for driving/controlling an AC electric motor preferably comprises electric current integration means for detecting the magnitude of the AC electric current supplied to the AC electric motor and integrating the detected magnitude of the AC electric current at predetermined time intervals, and the electric power control means preferably performs a control for adjusting the magnitude of the AC power supplied to the AC electric motor on the basis of a value integrated by the electric current integration means.

In the device for driving/controlling an AC electric motor, preferably, the control device variably sets the first limit value and the second limit value in accordance with the amount by which the operating lever in the revolution operation position has been operated from the neutral position.

### ADVANTAGEOUS EFFECTS OF THE INVENTION

As described above, in the device for driving/controlling an AC electric motor according to the present invention, electric power control means is provided for adjusting the magnitude of the AC power supplied to the AC electric motor. Consequently, in the case of a construction machine, for example, the AC power supplied to the AC electric motor can be adjusted with each type of work, and when the output of the electric motor may be low, the AC power can be reduced as necessary, and energy conservation can be achieved.

Due to the oil pressure detection means for detecting the working oil pressure of the hydraulic actuator being furnished and the electric power control means adjusting the magnitude of the AC power on the basis of the working oil pressure detected by the oil pressure detection means, the AC power can be increased when excavation or another work requiring power is performed and oil pressure is high, for example, and the output of the AC electric motor can be automatically adjusted according to the working oil pressure of the hydraulic actuator.

Furthermore, either electric current integration means is furnished for detecting the magnitude of the AC electric current supplied to the AC motor and integrating the magnitude of the detected AC electric current at predetermined time intervals, or electric current value slope calculation means is furnished for calculating the slope of the electric current value supplied to the AC electric motor, and the magnitude of the AC power is adjusted based on either the integrated value integrated by the electric current integration means or the slope of the electric current value calculated by the electric current value slope calculation means; whereby the output of the AC electric motor can be automatically adjusted according to either the integrated value of the electric current supplied to the AC electric motor or the slope of the electric current value.

In an electric construction machine of a configuration in which the electric motor is actuated with power generator characteristics to regenerate electric power when revolving is braked, when the operating lever is returned from the revolution operation position to the neutral position, the limit value of the regenerative electric current is set to the first limit value and the revolving base is slowly decelerated using a low-absorption torque, and when the operating lever is operated from the revolution operation position past the neutral position in the opposite direction, the limit value of the regenerative electric current is set to the second limit value higher than the first limit value and the revolving base is quickly decelerated using a high-absorption torque. As is described hereinafter, in cases in which the electric motor is actuated with power generator characteristics, the energy regeneration rate can be improved by increasing the electric current limit value during revolution braking. Consequently, according to the present invention, it is possible to provide a drive control device capable of more efficiently utilizing regenerative electric power while maintaining a satisfactory operational feel suited to the operation's purpose.

If the configuration is designed so that the control device sets a first limit value and second limit value that correspond to the amount by which the operating lever is operated from the neutral position, the first limit value and the second limit value change in conjunction according to the revolving speed of the revolving base, and it is therefore possible to provide a drive control device in which a satisfactory operational feel is achieved and the energy regeneration rate is improved regardless of the revolving speed.

### BRIEF DESCRIPTION OF THE DRAWINGS

FIG. 1 is a perspective view of a power shovel showing an example in which the hydraulic control device according to the present invention is applied;
FIG. 2 is a block diagram showing a hydraulic circuit and an electrical circuit showing the hydraulic control device according to the present invention;
FIG. 3A is a graph showing the relationship between oil pressure in the hydraulic control device and the rotational speed of the electric motor, FIG. 3B is a graph showing the relationship between oil pressure in the hydraulic control device and the flow rate of the working oil;
FIG. 4 is a graph showing an example of the relationship between time and the electric current supplied to the electric motor in the hydraulic control device;
FIG. 5 is a block diagram of the drive control system in the power shovel as the second embodiment;
FIG. 6 is a graph showing the relationship between the electric power regeneration rate and absorption torque in a case in which the revolution motor is actuated as a power generator; and
FIGS. 7A and 7B present graphs pertaining to a normal revolution braking state and a rapid revolution braking state, wherein FIG. 7A shows the change over time of the operation signal inputted to the control controller, and FIG. 7B is a graph showing the relationship with the limit value of the regenerative electric current set in the revolution inverter.

### DESCRIPTION OF THE EMBODIMENTS

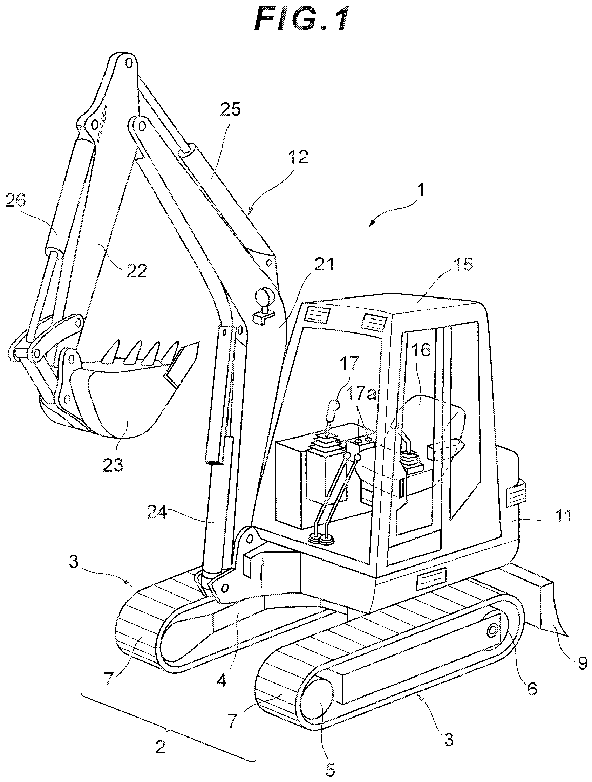

Embodiments of the present invention are described hereinbelow with reference to the drawings. In FIG. 1, a crawler-type power shovel 1 is shown as an example of the construction machine to which the hydraulic control device according to the present invention is applied. This power shovel 1 is configured from a travel device 2 configured with travel mechanisms 3, 3 provided to the left and right of a travel carriage 4 (a vehicle body) having the shape of an H in a plan view, a blade 9 provided in a vertically swingable manner to the rear part of the travel carriage 4, a revolving base 11 revolvably provided to the top part of the travel carriage 4, a shovel mechanism 12 provided to the front part of the revolving base 11, and an operator cabin 15 (a vehicle body) for a driver to occupy which is erected on the top part of the revolving base 11.

The pair of left and right travel mechanisms 3, 3 constituting the travel device 2 are configured with crawler belts 7 wrapped around drive sprocket wheels 5 provided to the left and right front parts of the travel carriage 4 and idler wheels 6 provided to the left and right rear parts of the travel carriage 4. The drive sprocket wheels 5 are rotatably driven by a traveling motor 36 (described hereinafter) actuated by oil pressure. The blade 9 is swung by the action of a hydraulically driven blade cylinder (not shown). The revolving base 11 is revolvably driven by a revolution drive mechanism 80 (described hereinafter) that uses an AC electric motor, and the drive configuration and control thereof are described hereinafter.

A shovel mechanism 12 is configured from: a boom 21 which is pivotally connected so as to be capable of rising and falling movement on the front part of the revolving base 11; an arm 22 pivotally connected to the distal end of the boom 21 so as to be capable of swinging up and down in the rising and falling plane of the boom 21; a bucket 23 pivotally connected to the distal end of the arm 22 so as to be capable of swinging up and down; and a boom cylinder 24, arm cylinder 25, and bucket cylinder 26 which are hydraulically actuated. The boom 21 is raised and lowered by the boom cylinder 24, the arm 22 is swung by the arm cylinder 25, and the bucket 23 is swung by the bucket cylinder 26. In the following description, these cylinders 24 to 26 and the blade cylinder of the blade 9 are collectively referred to as a "group of hydraulic cylinders 35." The operator cabin 15 is formed into the shape of a rectangular box enclosed on all sides, the interior of which is provided with an operator seat 16 for the driver to sit, and an operating device 17 for performing the actuated operation of the travel device 2 and the shovel mechanism 12.

The operating device 17 is provided with operating levers for performing operations of the power shovel 1 such as travel and excavation. By sitting in the operator seat 16 and operating the operating levers, the driver can control the driving of the group of hydraulic cylinders 35 and the traveling motor 36 to cause the power shovel 1 to travel, and can control the actuation of the shovel mechanism 12 to perform excavation and other work. The operating device 17 is also provided with mode switching means 17a for switching between a travel mode, an excavation mode, and an excavation eco mode (described in detail hereinafter), which all have different outputs. By sitting in the operator seat 16 and operating the mode switching means 17a, the driver can switch between the travel mode, the excavation mode, and the excavation eco mode (described in detail hereinafter). Examples that can be used as the mode switching means 17a include a travel two-speed switch for causing the power shovel 1 to travel forward in two speeds (high speed).

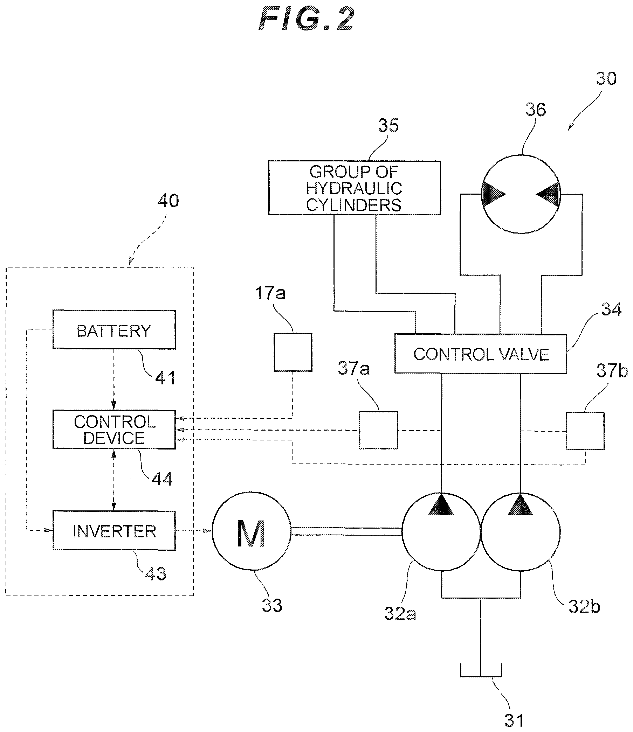

The power shovel 1 is also provided with a hydraulic control device 30 for supplying working oil to and actuating the group of hydraulic cylinders 35 and traveling motor 36. The hydraulic control device 30 is described below using FIG. 2. In FIG. 2, hydraulic circuits are shown in solid lines, and electrical or optical signal circuits are shown in dashed lines. In addition to the group of hydraulic cylinders 35 and the traveling motor 36 described above, the hydraulic control device 30 is configured comprising a tank 31 for storing working oil, two hydraulic pumps 32a, 32b for discharging working oil, an AC electric motor 33 for driving the hydraulic pumps 32a, 32b, a control valve 34 for performing control for causing the working oil discharged from the hydraulic pumps 32a, 32b to be supplied to the group of hydraulic cylinders 35 and traveling motor 36 in a supply direction and supply rate corresponding to the operation of the operating device 17, two pressure sensors 37a, 37b which are provided corresponding respectively to the hydraulic pumps 32a, 32b and which detect the oil pressure of the working oil discharged from the hydraulic pumps 32a, 32b, and a power source system 40.

The hydraulic pumps 32a, 32b are configured so as to be driven by the AC electric motor 33; with control by an inverter 43, the AC electric motor 33 is supplied with AC electric current from a battery 41 of the power source system 40, and the electric motor 33 is driven by this electric power. The power source system 40 is configured comprising the battery 41 for storing electric power and supplying DC power to the inverter 43 and a control device 44, the inverter 43 for inverting the DC power obtained from the battery 41 into AC power and supplying the power to the electric motor 33, and the control device 44 for controlling the supply of AC power of the inverter 43 to the electric motor 33, as shown in FIG. 2.

The supply of AC power to the electric motor 33 is performed by the control device 44 controlling the actuating of the inverter 43. The control device 44 controls the entire power source system 40 and functions from DC power received from the battery 41. The control device 44 is designed so that the output and rotational speed of the electric motor 33 can be detected by a motor rotational speed detection sensor (not shown) and the pressure sensors 37a, 37b, a control signal is generated based on the detected rotational speed, oil pressure, and other factors so that the oil pressure and the like supplied from the hydraulic pumps 32a, 32b is optimal, the control signal is sent to the inverter 43, and control is thereby performed in which the inverter 43 supplies AC electric current to the electric motor 33 on the basis of the control signal. The pressure sensors 37a, 37b are provided in order to detect the oil pressure of the working oil discharged from the hydraulic pumps 32a, 32b, and a value of the detected oil pressure is sent to the control device 44.

In the power shovel 1 in the present embodiment, the mode can be switched among three types: the travel mode, the excavation mode, and the excavation eco mode. The control mode of the rotational speed and output (electric power) of the electric motor 33 differs among the travel mode, the excavation mode, and the excavation eco mode. The rotational speed and output of the electric motor 33 in the travel mode are greater than in the excavation mode and the excavation eco mode under the same control conditions, and the rotational speed and output of the electric motor 33 in the excavation mode are greater than the rotational speed and output of the electric motor 33 in the excavation eco mode. Since the electric motor 33 has the characteristic of having a constant torque, the output of the electric motor 33 changes when the rotational speed is changed. In the present embodiment, the output of the electric motor 33 is 7 kW in the travel mode, 5 kW in the excavation mode, and 4 kW in the excavation eco mode. Examples of this mode switching are described hereinbelow.

### EXAMPLE 1

Example 1 shows an example in which mode switching is performed manually. As described above, the driver can switch among the travel mode, the excavation mode, and the excavation eco mode by operating the mode switching means 17a provided to the operating device 17, but a mode switch signal is sent to the control device 44 from the mode switching means 17a when the driver performs switching. Mode switch signals include a travel mode signal outputted when a switch is made to the travel mode, an excavation mode signal outputted when a switch is made to the excavation mode, and an electric current signal outputted when a switch is made to the excavation eco mode.

When the driver sits in the operator seat 16 and causes the power shovel 1 to travel, the driver operates the mode switching means 17a to switch to the travel mode. A travel mode signal is then sent to the control device 44, and the control device 44 increases the rotational speed of the electric motor 33 above that of the excavation mode and the excavation eco mode and drives the electric motor 33. When the power shovel 1 is made to perform excavation or other work, the mode switching means 17a is operated to switch to the excavation mode. An excavation mode signal is then sent to the control device 44, and the control device 44 brings the rotational speed of the electric motor 33 to a value less than that of the travel mode and greater than that of the excavation eco mode and drives the electric motor 33. When desiring to further minimize the output during excavation or other work, the driver operates the mode switching means 17a and switches to the excavation eco mode. An excavation eco mode signal is then sent to the control device 44, and the control device 44 brings the rotational speed of the electric motor 33 to a value less than that of the travel mode and the excavation mode and drives the electric motor 33.

In Example 1, the driver can manually vary the output of the electric motor 33 by operating the mode switching means 17a in accordance with the specifics of the work imposed on the power shovel 1 and other factors as described above, and needless output of the electric motor 33 can be minimized. The mode switching means 17a may also detect the pilot pressure of an operating lever (not shown) for operating the driving of the group of hydraulic cylinders 35 and the traveling motor 36, and automatically perform mode switching in accordance with the value of the detected pilot pressure. When mode switching is performed in this manner, the output value of the electric motor 33 changes depending on which between the group of hydraulic cylinders 35 and the traveling motor 36 has been actuated, and the output of the electric motor 33 can be optimized for the specifics of each type of work.

### EXAMPLE 2

In Example 2, an example is shown in which mode switching is performed automatically by the above-described pressure sensors 37a, 37b and control device 44. The oil pressure value detected by the pressure sensors 37a, 37b is detected by the control device 44 at predetermined time intervals. The control device 44 then establishes the output value of the electric motor 33 in accordance with the average value of the detected oil pressure value of the pressure sensors 37a, 37b and drives the electric motor 33. Specifically, for example, an arbitrary first oil pressure threshold and an arbitrary second oil pressure threshold of a value greater than the first oil pressure threshold are provided for the detected oil pressure, and when the oil pressure value (the aforementioned average value) detected by the control device 44 is less than the first oil pressure threshold, a switch is made to the travel mode and the output of the electric motor 33 is set to a value (7 kW) greater than those of the excavation mode and the excavation eco mode. When the oil pressure value (the aforementioned average value) detected by the control device 44 is greater than the first oil pressure threshold but less than the second oil pressure threshold, a switch is made to the excavation mode and the output of the electric motor 33 is set to a value (5 kW) less than that of the travel mode but greater than that of the excavation eco mode. When the oil pressure value (the aforementioned average value) detected by the control device 44 is greater than the second oil pressure threshold, a switch is made to the excavation eco mode and the output of the electric motor 33 is set to a value (4 kW) less than that of the travel mode and the excavation mode. Thus, the control device 44 establishes the output value of the electric motor 33 and drives the electric motor 33.

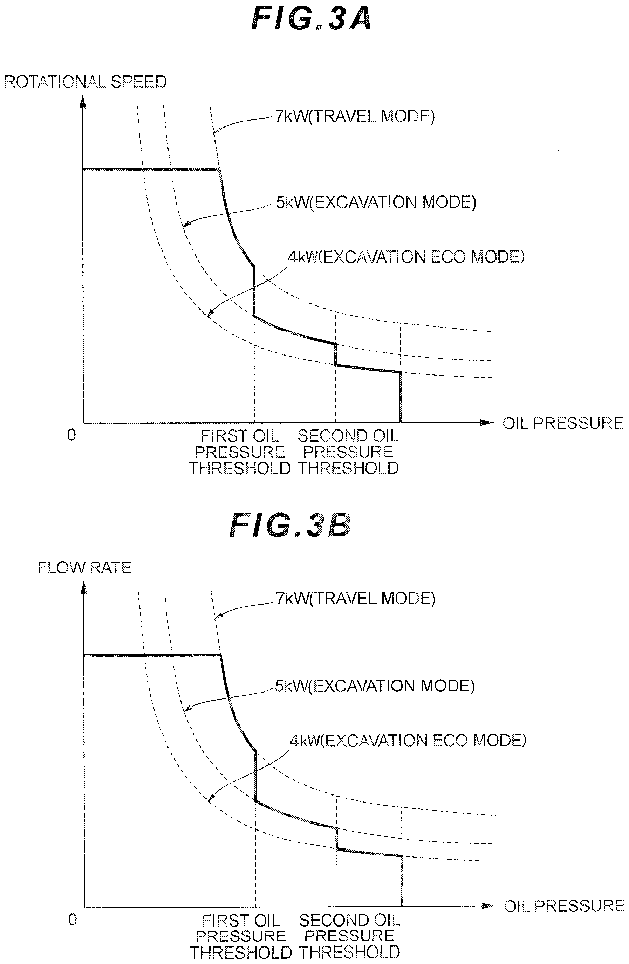

As described above, in Example 2, the control device 44 establishes the output of the electric motor 33 and drives the motor on the basis of the oil pressure detected by the pressure sensors 37a, 37b, whereby the output of the electric motor 33 can be switched according to the oil pressure. Thereby, the output of the electric motor 33 can be varied automatically, and the output of the electric motor 33 when the excavation mode or the like is performed and the oil pressure is high can be kept less than the output of the electric motor 33 when the power shovel 1 is made to travel or function otherwise and the oil pressure is low. For example, as shown in the solid line sections of the graphs of FIG. 3, the travel mode (7 kW) is enabled when the oil pressure is less than the first oil pressure threshold, the excavation mode (5 kW) is enabled when the oil pressure is between the first oil pressure threshold and the second oil pressure threshold, and the excavation eco mode (4 kW) is enabled when the oil pressure is greater than the second oil pressure threshold, making it possible for the output of the electric motor 33 to be reduced during excavation mode and particularly at times when the oil pressure is high.

An example was described above in which the control device 44 switches among three mode levels (the travel mode, the excavation mode, and the excavation eco mode) on the basis of the detected oil pressure value, but the mode used in Example 2 is not limited to the aforementioned three levels and may be another number of levels, or levels may be forgone and the output value of the electric motor 33 may be calculated and established from the detected value of the oil pressure.

### EXAMPLE 3

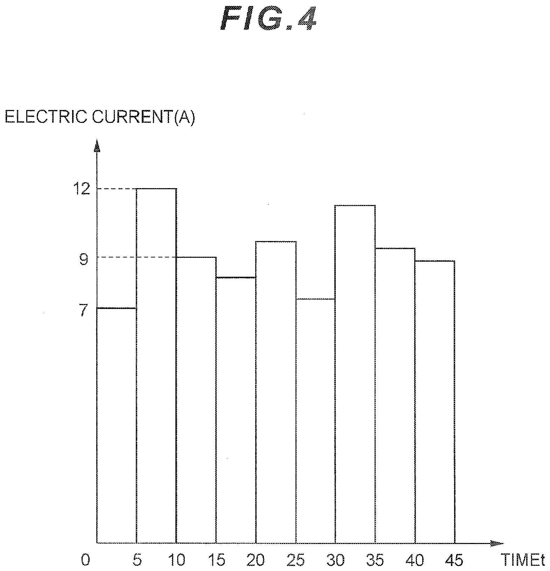

In Example 3, an example of mode switching is shown in which the control device 44 detects an integrated value of the electric current supplied to the electric motor 33 and establishes the output of the electric motor 33 in accordance with this integrated value. The control device 44 detects the integrated value of the electric current at predetermined times, e.g., every fifteen seconds of the AC electric current supplied to the electric motor 33 via the inverter 43. The detected integrated value is as shown in FIG. 4, for example, wherein the average value of electric current supplied to the electric motor 33 every five seconds is graphed. When, for example, the average value during 0 to 5 seconds is 7 A, the average value during 6 to 10 seconds is 12 A, and the average value during 11 to 15 seconds is 9 A, the integrated value of the electric current during the first fifteen seconds is 28 A. Thus, the power source system 40 calculates the integrated value of the electric current every fifteen seconds, for example, and establishes the output of the electric motor 33 in accordance with the calculation results.

Specifically, for example, an arbitrary first electric current threshold (for example, 30 A) and an arbitrary second electric current threshold (for example, 40 A) of a value greater than the first electric current threshold are provided for the calculated electric current integrated value, and when the electric current integrated value calculated by the control device 44 is less than the first electric current threshold (30 A), a switch is made to the travel mode and the output of the electric motor 33 is set to a value (7 kW) greater than that of the excavation mode and the excavation eco mode. When the electric current integrated value calculated by the control device 44 is a value between the first electric current threshold (30 A) and the second electric current threshold (40 A), a switch is made to the excavation mode and the output of the electric motor 33 is set to a value (5 kW) less than that of the travel mode and greater than that of the excavation eco mode. Then, when the electric current integrated value calculated by the control device 44 is greater than the second electric current threshold (40 A), a switch is made to the excavation eco mode and the output of the electric motor 33 is set to a value (4 kW) less than that of the travel mode and the excavation mode. The control device 44 establishes the output value and drives the electric motor 33 in this manner.

As described above, in Example 3, due to the output of the electric motor 33 being established and the motor being driven based on the integrated value of the electric current supplied to the electric motor 33, the integrated value being calculated by the control device 44, the output of the electric motor 33 can be switched according to the electric current integrated value. The output of the electric motor 33 can thereby be varied automatically. Since the electric current supplied to the electric motor 33, like the oil pressure, is greater during excavation mode and other work requiring power than during travel, the output of the electric motor 33 when the excavation mode or the like is performed and the electric current value is high can be kept lower than the output of the electric motor 33 when the power shovel 1 is made to travel and the electric current is low.

An example was described above in which switching among three mode levels (the travel mode, the excavation mode, and the excavation eco mode) was performed based on the calculated electric current integrated value, but the mode used in Example 3 is not limited to the aforementioned three levels and may be another number of levels, or levels may be forgone and the output value of the electric motor 33 may be calculated and established from the electric current integrated value.

In Example 3, an example is shown in which the control device 44 calculates the electric current integrated value and establishes the output of the electric motor 33 on the basis of this integrated value, but the control device 44 may also calculate the slope of the electric current value (the rate of change in the electric current per unit time, or another parameter) instead of the integrated value of the electric current, and establish the quickness which the output of the electric motor 33 and the rotational speed of the electric motor 33 recover (the rate at which the target rotational speed is reached) on the basis of the slope of the electric current value (i.e., the slope of oil pressure which changes along with the change in electric current). Thus, the rate at which the target rotational speed is reached can be suitably established for each type of work, for example, whereby needless energy consumption can be suppressed and energy conservation can be achieved. Furthermore, instead of the control device 44 itself performing functions such as detecting the electric current and calculating the integrated value, electric current calculation means (not shown) may be provided separate from the control device 44, and this electric current calculation means may be made to detect the electric current supplied to the electric motor 33 and calculate the electric current integrated value.

In the power shovel 1 in the present embodiment above, the rotational speed and output of the electric motor 33 can be varied according to the operation of mode switching means 17a, the pilot pressure of the operating means 17, the oil pressure value, and the integrated value of the electric current or the slope of the electric current value supplied to the electric motor 33, as in Examples 1 to 3 above. Consequently, in comparison with times when travel and other work is performed, the rotational speed and output of the electric motor 33 can be reduced during the excavation mode and other times when work requiring greater power is performed, and therefore energy conservation can be achieved with the electric motor 33. By increasing the output of the electric motor 33 during travel, the travel speed can be increased while maintaining and ensuring horsepower.

In the present embodiment, an example of the outputs of the electric motor 33 was shown in which the output is 7 kW during the travel mode, 5 kW during the excavation mode, and 4 kW during the excavation eco mode, but the output values of the electric motor 33 are not limited to these.

In Example 2 of the present embodiment, the control device 44 adjusts the output of the electric motor 33 on the basis of the average value of oil pressure, and in Example 3, an example is shown in which the control device 44 integrates the average value of the electric current at predetermined time intervals and adjusts the output of the electric motor 33 on the basis of this integrated value. However, the value that is the basis for the control device 44 to adjust the output of the electric motor 33 is not limited to values such as the average value of the oil pressure, the average value of the electric current, or the integrated value of the electric current. For example, it is also possible for the control device 44 to establish the output of the electric motor 33 on the basis of the maximum and minimum values of the detected oil pressure, the maximum and minimum values of the detected electric current, or the like.

Furthermore, the slope of electric current values rather than the integrated value of the electric current may be periodically detected, and the quickness with which the output of the electric motor 33 and the rotational speed of the electric motor 33 recover may be established based on this detected slope of electric current values. Thus, by making it possible to suitably establish the rate at which the target rotational speed of the electric motor 33 is reached, needless energy consumption can be further suppressed and energy conservation can be achieved.

In the present embodiment, a power shovel 1 comprising the hydraulic control device 30 is shown as an example of a construction machine, but the configuration of the hydraulic control device 30 is not limited to the above example; the number of hydraulic pumps 32 and pressure sensors 37 is not limited to two, for example. Nor is the construction machine according to the present invention limited to the power shovel 1; the present invention can also be applied to a high-altitude industrial vehicle, a mobile crane, a forklift, a loader, and the like.

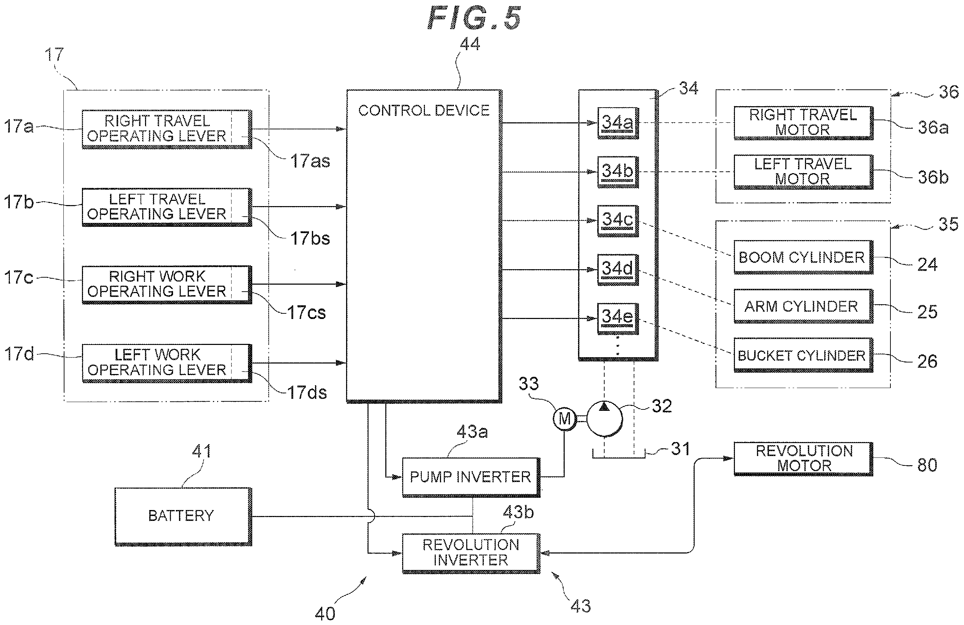

Next, the second embodiment of the present invention is described with reference to FIGS. 5 through 7. The objective of this embodiment is the power shovel 1 shown in FIG. 1, which is also referenced in the description, but descriptions of the same configurational components are omitted or simplified.

The revolving base 11 is mounted on the travel carriage 4 so as to be capable of revolving horizontally via a revolution drive mechanism (not shown), and a revolution motor 80 provided to the revolution drive mechanism is rotated forward or in reverse, whereby the revolving base 11 is capable of revolving horizontally to the right (clockwise in a plan view) or to the left (counterclockwise in a plan view) relative to the travel carriage 4. The revolution motor 80 is an AC electric motor capable of both powered running of being actuated as an electric motor and regenerative running of being actuated as a power generator. In the present embodiment, the configuration shown uses an interior permanent magnetic (IPM) motor which is AC driven by an inverter (hereinbelow referred to as a revolution inverter) 43b for a revolution motor.

The operating device 17 comprises right and left travel operating levers 17a, 17b for performing actuating operations of right and left travel motors 36a, 36b, right and left work operating levers 17c, 17d for performing actuating operations of the revolving base 11 and the shovel mechanism 12, and other components. The pair of right and left travel operating levers 17a, 17b are configured to be capable of being slanted forward and backward from a neutral position into which they are urged and held when not being operated. The right and left work operating levers 17c, 17d are configured to be capable of being slanted forward and backward and to the left and right from a neutral position into which they are urged and held when not being operated.

These operating levers 17a to 17d are provided with operation detectors 17as, 17bs, 17cs, 17ds for detecting the positional states (the direction and amount by which they are tilted from the neutral position) of the operating levers, and operation signals detected by the operation detectors are inputted to the control device 44. The operation detectors should be configured to be capable of detecting the positional states of the operating levers; for example, when a hydraulic control valve is used as the operating device, a pressure sensor for detecting pilot signal pressure that changes according to the positional states of the operating levers can be used, and when an electrical joystick is used as the operating device, a potentiometer or the like for detecting electrical resistance that changes according to the positional states of the operating levers can be used. The control device 44 controls the actuating of the traveling motor 36, the group of hydraulic cylinders 35, the revolution motor 80, and other components on the basis of the operation signals inputted from the operation detectors 17as, 17bs, 17cs, 17ds.

The control valve 34 is composed of a plurality of electromagnetic proportional control valves corresponding to the hydraulic actuators provided to the vehicle body, including travel control valves 34a, 34b corresponding to the right and left travel motors 36a, 36b, a boom control valve 34c corresponding to the boom cylinder 24, an arm control valve 34d corresponding to the arm cylinder 25, and a bucket control valve 34e corresponding to the bucket cylinder 26. Using the pressure oil supplied from a hydraulic pump 32, the control valve 34 performs a control for actuating these control valves in accordance with command signals outputted from the control device 44, and performs actuation control on the traveling motor 36 and the group of hydraulic cylinders 35.

The power source system 40 is configured comprising: the battery 41 composed of a lithium ion battery or another secondary battery; a pump inverter 43a for supplying electric power to a pump motor 33 on the basis of a command signal outputted from the control device 44; a revolution inverter 43b for supplying electric power to the revolution motor 80 during revolvable driving on the basis of a command signal outputted from the control device 44, and controlling the recharging of the battery 41 and other functions when revolving is braked; though not shown in detail, a recharger for receiving AC power from an applied power source and recharging the battery 41; and other components.

The pump inverter 43a inverts DC power supplied from the battery 41 to AC power of a voltage and frequency corresponding to the command signal outputted from the control device 44, supplies the power to the pump motor 33 to rotatably drive the hydraulic pump 32, and supplies the discharged pressure oil to the control valve 34.

During revolvable driving in which the revolution motor 80 is actuated with electric motor characteristics, the revolution inverter 43b inverts DC power supplied from the battery 41 to AC power of a voltage and frequency corresponding to the command signal outputted from the control device 44 to rotatably drive the revolution motor 80 composed of an AC electric motor, and the revolving base 11 is revolvably actuated with a revolving direction and revolving speed corresponding to the command signal (operation signal). When revolving is braked, the revolution motor 80 is actuated with power generator characteristics (the revolution motor 80 is rotatably driven with the revolving inertia of the revolving base 11 to generate power, i.e., to regenerate energy), and the regenerative electric power thus generated is supplied with an electric current of a predetermined limit to the battery 41 to control recharging. The specifics of the control during this recharging are described in detail hereinafter.

In this power shovel 1, the right work operating lever 17c is an operating lever for actuating the boom 21 and the bucket 23, and the left work operating lever 17d is an operating lever for actuating the revolving base 11 and the arm 22.

These work operating levers 17c, 17d can be tilted forward and backward and to the left and right from the neutral position. When the right work operating lever 17c is tilted forward/backward from the neutral position, the boom 21 falls/rises at an actuating rate corresponding to the angle of tilt, and when the right work operating lever 17c is tilted to the left/right from the neutral position, the bucket 23 swings at an actuating rate corresponding to the angle of tilt. When the left work operating lever 17d is tilted forward/backward from the neutral position, the arm 22 extends and contracts upward/downward at an actuating rate corresponding to the angle of tilt, and when the left work operating lever 17d is tilted to the left/right from the neutral position, the revolving base 11 is revolvably actuated to the left/right.

The revolvable actuating of the revolving base 11 by the operation of the left work operating lever 17d is performed by the revolution motor 80, but the revolution motor 80 is an AC electric motor, and the revolvable actuating control by the control device 44 is described.

The revolving operation of the revolving base 11 is performed by tilting the left work operating lever 17d to the right (right revolving) or the left (left revolving) from the neutral position. This operation is detected by the operation detector 17ds, an operation signal corresponding to the direction and angle of tilt of the operating lever is inputted to the control device 44, and the control device 44 outputs a command signal corresponding to this operation signal to the revolution inverter 43b and controls the actuating of the revolution motor 80.

When the left work operating lever 17d is either tilted to the right or left from the neutral position or operated in a direction in which the angle of tilt increases further from the right or left tilted angle position (referred to as the revolution operation position), the control device 44 determines that the actuating state of the revolving base 11 is a "revolvably driven state" (drive running state). The drive torque needed in order to cause the revolving base 11 to rotate at the revolving speed corresponding to the operation signal is then calculated, and a command signal corresponding to the calculated drive torque is generated and outputted to the revolution inverter 43b. The revolution inverter 43b inverts the DC power supplied from the battery 41 to AC power of a voltage and frequency corresponding to the command signal, supplies the power to the revolution motor 80, and actuates the revolution motor 80 with electric motor characteristics to revolvably actuate the revolving base 11 with a revolving direction and revolving speed corresponding to the command signal (the operation signal).

When the left work operating lever 17d is either returned to the neutral position from the right or left revolution operation position or operated in a direction in which the angle of tilt decreases from the revolution operation position, the control device 44 determines that the actuating state of the revolving base 11 is a "normal revolution braking state." Commonly, during excavation work, the revolving base 11 is moved back and forth between an excavating position and an earth-removing position. With this type of work, the revolving base 11, while revolving, preferably stops smoothly with an operational feel similar to when a hydraulic motor is used as a revolution motor. In view of this, in cases such as when the left work operating lever 17d is returned to the neutral position from the right/left revolution operation position, the control device 44 determines the "normal revolution braking state" to be in effect, and outputs a "normally brake" command signal to the revolution inverter 43b to control the actuating of the revolution motor 80 so that the revolving base 11 smoothly decelerates with an operational feel similar to when a hydraulic motor is used as the revolution motor.

When a "normally brake" command signal is inputted, the revolution inverter 43b switches the internal circuitry from drive circuitry to regenerative circuitry, sets the limit value of the regenerative electric current (the maximum electric current value) when the revolution motor 80 is actuated with power generator characteristics to a first limit value of low-absorption torque, and smoothly decelerates the revolving base 11. This first limit value is set so that the revolving speed of the revolving base 11 decelerates at a predetermined negative rate of acceleration, for example, so that the operational feel is the same as with revolving by the hydraulic motor as described above. At this time, the AC power generated by the revolution motor 80 is inverted to DC power by the revolution inverter 43b and supplied to the battery 41, and the battery 41 is recharged.

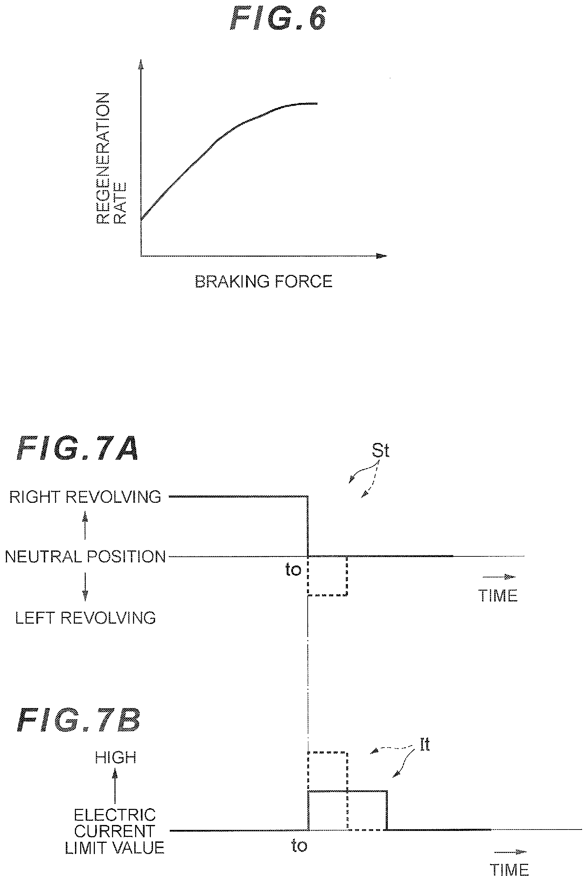

When the revolution motor 80 is actuated as a power generator, the rate of power regeneration changes according to the absorption torque (braking force) of the revolution motor 80. FIG. 6 is a graph schematically showing the manner of this change, wherein the vertical axis of the graph is the electric power regeneration rate and the horizontal axis is the braking force. It is clear from this graph that the greater the braking force of the revolution motor 80, the higher the electric power regeneration rate. This demonstrates that the energy recovery rate can be improved by increasing the braking force of the revolution motor 80, i.e. the absorption torque when revolving is braked. The absorption torque of the revolution motor 80 is regulated by the limit value of the regenerative electric current which is set in the revolution inverter 43b.

When the left work operating lever 17d for performing the revolution operation is operated from the revolution operation position during the revolvable actuating of the revolving base 11 past the neutral position in the opposite direction, presumably the purpose is to rapidly stop or rapidly move in reverse.

When the left work operating lever 17d is operated from the right or left revolution operation position past the neutral position in the opposite direction (when a switch is made to an opposite direction operation signal within a predetermined amount of time), the control device 44 determines that the actuating state of the revolving base 11 is a "rapid revolution braking state," and outputs a "rapidly brake" command signal to the revolution inverter 43b to control the actuating of the revolution motor 80 so that the revolving base 11 decelerates more rapidly than in the normal revolution braking state.

When a "rapidly brake" command signal is inputted, the revolution inverter 43b switches the internal circuitry from drive circuitry to regenerative circuitry, similar to normal braking, and sets the limit value of the regenerative electric current to a second limit value (greater than the first limit value) of high-absorption torque to rapidly decelerate the revolving base 11.

FIG. 7 presents graphs showing the relationship on a time axis between (A) the operation signal St inputted to the control device 44 and (B) the limit value It of the regenerative electric current set in the revolution inverter 43b on the basis of the command signal outputted from the control device 44 in accordance with this operation signal St, during the "normal revolution braking state" and the "rapid revolution braking state." In these graphs, the "normal revolution braking state" is shown by solid lines, and the "rapid revolution braking state" is shown by dashed lines. In (A), which shows the change over time in the operation signal, the neutral position is shown as the center (± 0), the area above the center shows an operation signal of right revolving, and the area below the center shows an operation signal of left revolving.

In cases of the "normal revolution braking state" in which the right-revolving operation signal St is returned to the neutral position which includes a dead zone of a predetermined range at time t₀, as shown by the solid lines in FIG. 7, the revolution inverter 43b, having received a "normally brake" command signal from the control device 44, sets the limit value of the regenerative electric current to the first limit value of low-absorption torque and smoothly decelerates the revolving base 11. As previously described, the first limit value is set based on the operational feel, and the revolving base, while revolving right, is smoothly braked to decelerate and stop.

In cases of the "rapid revolution braking state" in which the right-revolving operation signal St is operated in the left-revolving direction past the neutral position which includes a dead zone of a predetermined range at time t₀, as shown by the dashed lines in FIG. 7, the revolution inverter 43b, having received a "rapidly brake" command signal from the control device 44, sets the limit value of the regenerative electric current to the second limit value which is higher than the first limit value and actuates the revolution motor 80 with power generator characteristics within the confines of the second limit value.

Since this second limit value is higher than the first limit value during normal braking and has a high absorption torque, a large braking force acts on the revolving base 11 which is revolving, and the revolving base 11 rapidly decelerates. The revolving base 11 therefore stops revolving at the revolving idling angle sooner than during normal braking, and braking control that matches the operation's purpose is achieved.

Due to the limit value of the maximum regenerative electric current being set to the second limit value which is higher than the first limit value, the inertia energy of the revolving base 11 is inverted to electrical energy in a shorter amount of time; therefore, mechanical loss can be reduced, power generating efficiency can be improved, and the energy regeneration rate can be improved.

The second limit value is preferably set to about 1.5 to 2 times the first limit value. The second limit value is preferably high in terms of the energy regeneration rate, but if it is excessively high, the revolving base 11 stops suddenly, which is undesirable in terms of the operational feel. The first and second limit values can also be configured so as to change in conjunction, either incrementally or non-incrementally, according to the magnitude of the revolution operation signal or the revolving speed of the revolving base 11. With such a configuration, suitable first and second limit values are set according to the revolving speed of the revolving base 11, and it is therefore possible both to achieve a satisfactory operational feel and improve the energy regeneration rate regardless of the revolving speed.

Consequently, with a control configuration such as is described above, it is possible to provide a drive control device capable of more efficiently utilizing regenerative electric power while maintaining a satisfactory operational feel suited to the operation's purpose.

### EXPLANATION OF NUMERALS AND CHARACTERS

- 1:: Power shovel
- 17:: Operating device (hydraulic actuator operating means)
- 17a:: Mode switching means (electric power adjustment operation means)
- 30:: Hydraulic control device
- 32a, 32b:: Hydraulic pumps
- 33:: Electric motor (AC electric motor)
- 35:: Group of hydraulic cylinders (hydraulic actuators)
- 36:: Traveling motor (hydraulic actuator)
- 37a, 37b:: Pressure sensors (oil pressure detection means)
- 41:: Battery
- 43:: Inverter
- 44:: Control device (electric power control means)

## Claims

1. A device for driving/controlling an AC electric motor, comprising:
a battery (41) for outputting DC power;
an inverters (43) for inverting DC power from the battery to AC power;
an AC electric motor (33) driven by the AC power inverted by the inverter;
a driven device (32a, 32b) driven by the AC electric motor;
operating means (17) operated in order to perform drive control of the driven device; and electric power control means (44) for adjusting the magnitude of the AC power supplied to the AC electric motor, wherein:
the driven device is configured from a traveling revolving vehicle having a revolving base (11) provided on top of a travel device (2), and is configured so that the revolving base is revolvably driven relative to the travel device by the AC electric motor;
the operating means is configured from a revolving operation lever (17c, 17d) operated in order to revolvably drive the revolving base and is provided with revolution operation detection means (17as, 17bs, 17cs, 17ds) for detecting the direction and amount in which the revolving operation lever is operated from a neutral position; and
the electric power control means is configured so that the AC electric motor is supplied with AC power and driven according to electric device drive characteristics to revolvably drive the revolving base in accordance with a revolution driving operation of the revolving operation lever, the AC electric motor is driven according to power generator characteristics by the revolving inertia force of the revolving base in accordance with a revolution braking operation by returning the operation of the revolution lever, and the resulting regenerative electric power is supplied to the battery and the battery is recharged, and wherein:
when the operation detection means has detected that the operating lever has returned from a revolution operation position to the neutral position, the control device sets a limit value of the regenerative electric current for the AC electric motor to a first limit value and slowly decelerates the revolving base using a low-absorption torque;
**characterized in that**
when the operation detection means has detected that the operating lever has been operated in the opposite direction past the neutral position from the revolution operation position, the control device sets the limit value of the regenerative electric current for the AC electric motor to a second limit value higher than the first limit value and quickly decelerates the revolving base using a high-absorption torque.

2. The device for driving/controlling an AC electric motor according to claim 1, wherein:
the driven device is configured from a hydraulic pump (32a, 32b) driven by the AC electric motor and adapted to discharge working oil, and a hydraulic actuator (35, 36) driven by the working oil discharged from the hydraulic pump;
oil pressure detection means (37a, 37b). is provided for detecting the working oil pressure of the hydraulic actuator; and
the electric power control means performs a control for adjusting the magnitude of the AC power supplied to the AC electric motor on the basis of the working oil pressure detected by the oil pressure detection means.

3. The device for driving/controlling an AC electric motor according to claim 1 or 2, comprising: electric current integration means for detecting the magnitude of the AC electric current supplied to the AC electric motor and integrating the detected magnitude of the AC electric current at predetermined time intervals; and in that
the electric power control means performs a control for adjusting the magnitude of the AC power supplied to the AC electric motor on the basis of a value integrated by the electric current integration means.

4. The device for driving/controlling an AC electric motor according to any of the preceding claims, wherein the control device variably sets the first limit value and the second limit value in accordance with the amount by which the operating lever in the revolution operation position has been operated from the neutral position.

## Patentansprüche

1. Vorrichtung zur Ansteuerung/Steuerung eines elektrischen Wechselstrommotors, aufweisend:
eine Batterie (41) zur Ausgabe von Gleichstromleistung;
einen Wechselrichter (43) zur Umwandlung von Gleichstromleistung aus der Batterie in Wechselstromleistung;
einen elektrischen Wechselstrommotor (33), der durch die von dem Wechselrichter umgewandelte Wechselstromleistung angesteuert wird;
eine angesteuerte Vorrichtung (32a, 32b), die durch den elektrischen Wechselstrommotor angesteuert wird;
Bedienmittel (17), die betätigt werden, um eine Ansteuerungssteuerung der angesteuerten Vorrichtung durchzuführen; und
elektrische Leistungssteuerungsmittel (44) zum Einstellen der Größe der dem elektrischen Wechselstrommotor zugeführten Wechselstromleistung, wobei:
die angesteuerte Vorrichtung aus einem fahrenden, sich drehenden Fahrzeug mit einer Drehbasis (11), die oben auf einer Fahrvorrichtung (2) vorgesehen ist, aufgebaut ist, und so aufgebaut ist, dass die drehbare Basis durch den elektrischen Wechselstrommotor relativ zu der Fahrvorrichtung drehbar angesteuert wird;
die Bedienmittel aus einem Drehbedienhebel (17c, 17d), der betätigt wird, um die Drehbasis drehbar anzusteuern, aufgebaut sind und mit Drehbetätigungserfassungsmitteln (17as, 17bs, 17cs, 17ds) zur Erfassung der Richtung und des Betrags, in dem der Drehbedienhebel von einer neutralen Position aus betätigt wird, versehen sind; und
die elektrischen Leistungssteuerungsmittel so aufgebaut sind, dass der elektrische Wechselstrommotor mit Wechselstromleistung versorgt wird und gemäß den Ansteuerungseigenschaften der elektrischen Vorrichtung angesteuert wird, um die Drehbasis in Übereinstimmung mit einer Drehansteuerungsbetätigung des Drehbedienhebels drehbar anzusteuern, wobei der elektrische Wechselstrommotor gemäß Leistungserzeugungseigenschaften durch die Drehträgheitskraft der Drehbasis in Übereinstimmung mit einer Drehbremsbetätigung durch Zurückkehren der Betätigung des Drehhebels angesteuert wird, und die resultierende elektrische Regenerativleistung der Batterie zugeführt wird und die Batterie wieder aufgeladen wird, und wobei:
wenn die Betätigungserfassungsmittel erfasst haben, dass der Bedienhebel von einer Drehbetätigungsposition in die nuetrale Position zurückgekehrt ist, die Steuerungsvorrichtung einen Grenzwert des elektrischen Regenerativstroms für den elektrischen Wechselstrommotor auf einen ersten Grenzwert setzt und die Drehbasis unter Verwendung einer niedrigen Drehmomentaufnahme langsam abbremst;
**dadurch gekennzeichnet, dass**,
wenn die Betätigungserfassungsmittel erfasst haben, dass der Bedienhebel von der Drehbetätigungsposition aus in der entgegengesetzten Richtung hinter der neutralen Position betätigt worden ist, die Steuerungsvorrichtung den Grenzwert des elektrischen Regenerativstroms für den elektrischen Wechselstrommotor auf einen zweiten Grenzwert, der höher als der erste Grenzwert ist, setzt und die Drehbasis unter Verwendung einer hohen Drehmomentaufnahme schnell abbremst.

2. Vorrichtung zur Ansteuerung/Steuerung eines elektrischen Wechselstrommotors nach Anspruch 1, wobei:
die angesteuerte Vorrichtung aus einer Hydraulikpumpe (32a, 32b) aufgebaut ist, die von dem elektrischen Wechselstrommotor angesteuert wird, und angepasst ist, Arbeitsöl abzugeben, und einem hydraulischen Aktuator (35, 36), der durch das von der Hydraulikpumpe abgegebene Arbeitsöl angesteuert wird;
Öldruckerfassungsmittel (37a, 37b) zur Erfassung des Arbeitsöldrucks des hydraulischen Aktuators vorgesehen sind; und
die elektrischen Leistungssteuerungsmittel eine Steuerung zum Einstellen der Größe der dem elektrischen Wechselstrommotor zugeführten Wechselstromleistung basierend auf dem von dem Öldruckerfassungsmittel erfassten Arbeitsöldruck durchführen.

3. Vorrichtung zur Ansteuerung/Steuerung eines elektrischen Wechselstrommotors nach Anspruch 1 oder 2, aufweisend:
elektrische Stromintegrationsmittel zur Erfassung der Größe der dem elektrischen Wechselstrommotor zugeführten elektrischen Wechselstromleistung, und zum Integrieren der erfassten Größe des elektrischen Wechselstroms zu vorbestimmten Zeitintervallen; und, dass
die elektrischen Leistungssteuerungsmittel eine Steuerung zum Einstellen der Größe des dem elektrischen Wechselstrommotor zugeführten Wechselstroms basierend auf einem durch die elektrischen Stromintegrationsmittel integrierten Wert durchführen.

4. Vorrichtung zur Ansteuerung/Steuerung eines elektrischen Wechselstrommotors nach einem der vorhergehenden Ansprüche, wobei die Steuerungsvorrichtung den ersten Grenzwert und den zweiten Grenzwert variabel in Übereinstimmung mit dem Betrag, um den der Bedienhebel in der Drehbetätigungsposition von der neutrale Position aus betätigt worden ist, setzt.

## Revendications

1. Dispositif pour entraîner/commander un moteur électrique à courant alternatif, comprenant :
une batterie (41) pour fournir en sortie une alimentation en courant continu ;
un convertisseur (43) pour convertir une alimentation en courant continu provenant de la batterie en alimentation en courant alternatif ;
un moteur électrique à courant alternatif (33) entraîné par l'alimentation en courant alternatif convertie par le convertisseur ;
un dispositif entraîné (32a, 32b) entraîné par le moteur électrique à courant alternatif ;
un moyen de manoeuvre (17) manoeuvré afin de réaliser une commande d'entraînement du dispositif entraîné ; et
un moyen de commande d'alimentation électrique (44) pour régler la grandeur de l'alimentation en courant alternatif fournie au moteur électrique à courant alternatif, dans lequel :
le dispositif entraîné est configuré à partir d'un véhicule tournant de déplacement ayant une base tournante (11) prévue par-dessus un dispositif de déplacement (2), et est configuré de sorte que la base tournante soit entraînée de façon tournante par rapport au dispositif de déplacement par le moteur électrique à courant alternatif ;
le moyen de manoeuvre est configuré à partir d'un levier de manoeuvre tournant (17c, 17d) manoeuvré afin d'entraîner de façon tournante la base tournante et est pourvu d'un moyen de détection de manoeuvre de rotation (17as, 17bs, 17cs, 17ds) pour détecter la direction et la quantité de manoeuvre du levier de manoeuvre tournant depuis une position neutre ; et
le moyen de commande d'alimentation électrique est configuré de sorte que le moteur électrique à courant alternatif soit fourni en alimentation en courant alternatif et entraîné selon des caractéristiques d'entraînement de dispositif électrique pour entraîner de façon tournante la base tournante conformément à une manoeuvre d'entraînement en rotation du levier de manoeuvre tournant, le moteur électrique à courant alternatif est entraîné selon des caractéristiques de générateur d'alimentation par la force d'inertie tournante de la base tournante conformément à une manoeuvre de freinage en rotation en renvoyant la manoeuvre du levier de rotation, et l'alimentation électrique régénérative résultante est fournie à la batterie et la batterie est rechargée, et dans lequel :
lorsque le moyen de détection de manoeuvre a détecté que le levier de manoeuvre est retourné depuis une position de manoeuvre de rotation vers la position neutre, le dispositif de commande fixe une valeur limite du courant électrique régénératif pour le moteur électrique à courant alternatif à une première valeur limite et décélère lentement la base tournante à l'aide d'un couple de faible absorption ;
**caractérisé en ce que**
lorsque le moyen de détection de manoeuvre a détecté que le levier de manoeuvre a été manoeuvré dans la direction opposée au-delà de la position neutre depuis la position de manoeuvre de rotation, le dispositif de commande fixe la valeur limite du courant électrique régénératif pour le moteur électrique à courant alternatif à une seconde valeur limite plus élevée que la première valeur limite et décélère rapidement la base tournante à l'aide d'un couple d'absorption élevée.

2. Dispositif pour entraîner/commander un moteur électrique à courant alternatif selon la revendication 1, dans lequel :
le dispositif entraîné est configuré à partir d'une pompe hydraulique (32a, 32b) entraînée par le moteur électrique à courant alternatif et adaptée pour refouler une huile de travail, et un actionneur hydraulique (35, 36) entraîné par l'huile de travail refoulée par la pompe hydraulique ;
un moyen de détection de pression d'huile (37a, 37b) est fourni pour détecter la pression d'huile de travail de l'actionneur hydraulique ; et
le moyen de commande d'alimentation électrique réalise une commande pour régler la grandeur de l'alimentation en courant alternatif fournie au moteur électrique à courant alternatif sur la base de la pression d'huile de travail détectée par le moyen de détection de pression d'huile.

3. Dispositif pour entraîner/commander un moteur électrique à courant alternatif selon la revendication 1 ou 2, comprenant : un moyen d'intégration de courant électrique pour détecter la grandeur du courant électrique alternatif fourni au moteur électrique à courant alternatif et intégrer la grandeur détectée du courant électrique alternatif à des intervalles de temps prédéterminés ; et en ce que le moyen de commande d'alimentation électrique réalise une commande pour régler la grandeur de l'alimentation en courant alternatif fournie au moteur électrique à courant alternatif sur la base d'une valeur intégrée par le moyen d'intégration de courant électrique.

4. Dispositif pour entraîner/commander un moteur électrique à courant alternatif selon l'une quelconque des revendications précédentes, dans lequel le dispositif de commande fixe de façon variable la première valeur limite et la seconde valeur limite conformément à la quantité de manoeuvre du levier de manoeuvre dans la position de manoeuvre de rotation depuis la position neutre.
